# EUROPÄISCHE PATENTSCHRIFT

(11) **EP 1 068 003 B1**
(45) Veröffentlichungstag und Bekanntmachung des Hinweises auf die Patenterteilung: **03.09.2003**
(21) Anmeldenummer: 99916799.2
(22) Anmeldetag: 17.03.1999
(51) Int. Cl.: B01D 53/90, B01D 53/94

(54) **VERFAHREN UND VORRICHTUNG ZUR KATALYTISCHEN ENTFERNUNG EINES SCHADSTOFFES IN EINEM ABGAS EINER VERBRENNUNGSANLAGE**
METHOD AND DEVICE FOR CATALYTIC REMOVAL OF A POLLUTANT CONTAINED IN THE EXHAUST GAS OF AN INTERNAL COMBUSTION SYSTEM
PROCEDE ET DISPOSITIF DE SUPPRESSION CATALYTIQUE D'UN POLLUANT CONTENU DANS LES GAZ D'ECHAPPEMENT D'UNE INSTALLATION A COMBUSTION INTERNE

(30) Priorität: 31.03.1998 DE 19814386
(43) Veröffentlichungstag der Anmeldung: 17.01.2001
(73) Patentinhaber: SIEMENS AKTIENGESELLSCHAFT, 80333 München (DE)
(72) Erfinder: HOFMANN, Lothar, D-96264 Altenkunstadt (DE); MATHES, Wieland, D-96247 Michelau (DE)
(86) Internationale Anmeldenummer: DE9900746
(87) Internationale Veröffentlichungsnummer: WO99049956

(56) Entgegenhaltungen:
- EP-B- 0 697 062
- US-A- 5 047 220
- PATENT ABSTRACTS OF JAPAN vol. 17, no. 52, 2. Februar 1993 (1993-02-02) & JP 04 265124 A (SUMITOMO KEMIKARU ENJINIARINGU KK), 21. September 1992 (1992-09-21)

## Beschreibung

Die Erfindung bezieht sich auf ein Verfahren zur katalytischen Entfernung eines Schadstoffes in einem Abgas einer Verbrennungsanlage, wobei in Abhängigkeit von der Konzentration des Schadstoffes pro Zeiteinheit eine vorgegebene Menge eines Reduktionsmittels in das Abgas eingebracht und zusammen mit dem Schadstoff an einem Katalysator umgesetzt wird. Die Erfindung bezieht sich ferner auf eine Vorrichtung zur Durchführung des genannten Verfahrens.

Bei der Verbrennung eines fossilen Brennstoffs oder von Müll in einer Verbrennungsanlage entstehen in nicht unerheblichem Umfang Schadstoffe wie Stickoxide, Kohlenwasserstoffe, Kohlenmonoxid, Schwefeloxide und insbesondere Dioxine und Furane, welche über das Abgas der Verbrennungsanlage in die Umwelt gelangen können. Eine derartige Schadstoffe emittierende Verbrennungsanlage ist beispielsweise eine Kesselanlage, ein Kohle-, Öl- oder Gas-befeuertes Fossilkraftwerk, eine Gasturbine oder aber auch ein Verbrennungsmotor, insbesondere ein Dieselmotor. Auch eine Müllverbrennungsanlage emittiert die genannten Schadstoffe.

Aufgrund strenger gesetzlicher Vorschriften, welche die Abgabemenge der obengenannten Schadstoffe limitieren, ist für die genannten Verbrennungsanlagen eine zusätzliche Behandlung der Abgase zur Verminderung der darin enthaltenen Schadstoffe erforderlich. Hierzu sind in der Vergangenheit eine Vielzahl von Katalysatoren entwickelt worden, welche die genannten Schadstoffe zu ungefährlichen Verbindungen umsetzen.

So sind beispielsweise für die Verringerung der Schadstoffe im Abgas eines Otto-Motors edelmetallhaltige Katalysatoren bekannt, an denen Kohlenwasserstoffe und Kohlenmonoxid mit Stickoxiden zu Kohlendioxid, Stickstoff und/oder Wasser umgewandelt werden. Auch sind Katalysatoren zum Abbau von Dioxinen und/oder Furanen bekannt, welche ein katalytisch aktives Material auf der Basis von Titandioxid umfassen, an denen die Dioxine und/oder Furane mit im Abgas vorhandenem Restsauerstoff zu unschädlichen Verbindungen oxidiert werden.

Bei ungeeigneter Abgaszusammensetzung ist es verschiedentlich erforderlich, daß dem Abgas zusätzlich ein Reaktionsmittel beigegeben werden muß, welches an einem geeigneten Katalysator mit dem zu beseitigenden Schadstoff zu unschädlichen Verbindungen reagiert. Beispielsweise muß zum Abbau von Stickoxiden in Sauerstoff-haltigen Abgasen als ein Reaktionsmittel ein geeignetes Reduktionsmittel dem Abgas beigegeben werden, welches auch in Anwesenheit von Sauerstoff die im Abgas vorhandenen Stickoxide zu unschädlichem Stickstoff reduziert. Diese Reaktion läßt sich mit einem sogenannten DeNOx-Katalysator auf Basis von Titandioxid mit Beimengungen an Vanadiumpentoxid, Molybdäntrioxid und/oder Wolframtrioxid katalysieren, welcher gemäß dem SCR-Verfahren der selektiven katalytischen Reduktion Stickoxide mit einem geeigneten Reduktionsmittel wie Ammoniak zu Stickstoff und Wasser umsetzt.

Um einen vollständigen Abbau des Schadstoffes im Abgas zu erzielen, muß das separat zugegebene Reaktionsmittel in einer bezüglich der Konzentration des Schadstoffes stöchiometrischen Menge zugegeben werden. Da jedoch bei Verbrennungsanlagen die Konzentration des Schadstoffes im Abgas häufig zeitlich schwankt, und da zudem andere Faktoren des Abgases wie Temperatur oder Druck die Umsetzung des Schadstoffes mit dem Reaktionsmittel beeinflussen, kommt es des öfteren zu einer Überdosierung des Reaktionsmittels. Dies hat eine Emission des Reaktionsmittels zusammen mit dem Abgas in die Umwelt zur Folge. Eine derartige - auch Reaktionsmittel-Schlupf genannte - Emission von Reaktionsmittel muß vermieden werden, wenn das Reaktionsmittel selbst nicht unschädlich ist. Zusätzlich bedeutet eine Überdosierung des Reaktionsmittels stets auch eine unwirtschaftliche Arbeitsweise, da teures Reaktionsmittel ungenutzt im Abgas verbleibt.

Aus der US 5,047,220 ist eine stationäre Verbrennungsanlage mit einer im Wesentlichen konstanten Schadstoffemission zu entnehmen. Bei dieser Anlage ist die Erfassung der Stickoxidkonzentration im Abgas nach einem Katalysator vorgesehen. In Abhängigkeit der nach dem Katalysator gemessenen Stickoxidkonzentration wird die Menge des zuzudosierenden Reaktionsmittels angepasst. Dieses System ist jedoch weniger geeignet für eine nicht-stationäre Verbrennungsanlage, bei der aufgrund von Lastwechseln Betriebszustände mit unterschiedlichen Schadstoffemissionen auftreten.

Mit erheblichem technischen Aufwand wird daher eine an den aktuellen Zustand des Abgases angepaßte, möglichst exakte stöchiometrische Dosierung des Reaktionsmittels versucht. Hierbei wird es zur Bestimmung der pro Zeiteinheit in das Abgas einzubringenden Menge des Reaktionsmittels nicht nur erforderlich, die im Abgas herrschende Konzentration des Schadstoffes entweder direkt zu messen oder anhand von Kennlinien aus betriebsrelevanten Parametern der Verbrennungsanlage zu berechnen, sondern es müssen auch betriebsrelevante Parameter des Katalysators, z.B. Katalysatortemperatur, katalytische Aktivität oder Speicherkapazität, und Parameter des Abgases, z.B. Druck, Gaszusammensetzung oder Temperatur, durch geeignete Analyseverfahren berücksichtigt werden. Ein solches, technisch aufwendiges Verfahren zur Ermittlung der Dosiermenge eines Reaktionsmittels in ein stickoxidhaltiges Abgas ist z.B. aus der EP 0 697 062 B1 bekannt.

Ein solch aufwendiges Verfahren mit einer teuren Meßanalytik ist jedoch aus Kostengründen gerade zur Nachrüstung älterer Verbrennungsanlagen nicht sinnvoll. Auch ist gerade in der Abgasanlage von zur Traktion von Fahrzeugen eingesetzten Verbrennungsmotoren kein zusätzlicher Raum mehr für notwendige Sensorelemente zur Erfassung Abgas- oder Katalysator-spezifischer Parameter vorhanden. Zusätzlich muß die erforderliche Einbringvorrichtung für eine exakte Dosierung hochdynamisch ausgelegt sein, um bei jedem Betriebszustand der Verbrennungsanlage und entsprechender Abgasparameter schnell und genau anzusprechen. Auch dies verursacht hohe Kosten.

Aufgabe der Erfindung ist es, ein besonders kostengünstiges und einfaches Verfahren zur katalytischen Entfernung eines Schadstoffes in einem Abgas einer Verbrennungsanlage durch Umsetzung eines Reaktionsmittels anzugeben, ohne daß hierbei ein nennenswerter Schlupf oder ein Mehrverbrauch an Reaktionsmittel auftritt. Auch soll eine zur Durchführung des Verfahrens besonders einfache, wenig Raum bean spruchende und zudem kostengünstige Vorrichtung angegeben werden.

Bezüglich des Verfahrens wird erfindungsgemäß für die Konzentration des Schadstoffes über mehrere Betriebszustände mit unterschiedlichen Schadstoffemissionen hinweg ein zeitlicher Mittelwert gebildet und bei einem bei stöchiometrischer Zudosierung des Reaktionsmittels auf einen im wesentlichen vollständigen Umsatz des Schadstoffs ausgelegten Katalysator das Reaktionsmittel unterstöchiometrisch in Bezug zu dem Mittelwert in das Abgas eingebracht.

Die Erfindung geht dabei in einem ersten Schritt davon aus, daß sich ein Schlupf an Reaktionsmittel vermeiden läßt, wenn nicht ein vollständiger, sondern lediglich ein nennenswerter Umsatz des Schadstoffes gefordert wird. In einem solchen Fall kann nämlich während der gesamten Betriebsdauer der Verbrennungsanlage unterstöchiometrisch entsprechend dem gewollten Umsatz zudosiert werden. Dies bietet bei kleinen Schwankungen der Konzentration des Schadstoffes bei unvorhersehbaren Betriebszuständen der Verbrennungsanlage ausreichend Sicherheit. Jedoch bleibt bei einer derartigen Vorgehensweise das gleiche Problem bestehen wie bei einer in jedem Betriebszustand stöchiometrischen Zudosierung. Auch im Falle einer unterstöchiometrischen Zudosierung muß für jeden Betriebszustand der Verbrennungsanlage sichergestellt werden, daß entsprechend der aktuellen Konzentration des Schadstoffes im Abgas tatsächlich unterstöchiometrisch zudosiert wird. Um somit einen Schlupf an Reaktionsmittel sicher zu verhindern, bedarf es wiederum analytischer Meßinstrumente.

Die Erfindung geht nun in einem zweiten Schritt davon aus, daß sich ein solcher Aufwand vermeiden läßt, wenn nicht jeder Betriebszustand der Verbrennungsanlage für sich, sondern die Betriebsdauer der Verbrennungsanlage zeitlich gemittelt betrachtet wird. Wird ein zeitlicher Mittelwert für die Konzentration des Schadstoffes im Abgas bestimmt und das Reaktionsmittel unterstöchiometrisch in Bezug zu dem Mittelwert in das Abgas eingebracht, so werden Schwankungen hinsichtlich der Konzentration des Schadstoffs abgefangen, ohne daß es zu einer zusätzlichen Emission an Reaktionsmittel kommt. Ist die aktuelle Konzentration des Schadstoffes im Abgas geringer als der über einen gewissen Zeitraum oder über mehrere Betriebszustände gemittelte Mittelwert der Konzentration, so wird die Mehrmenge an Reaktionsmittel mit dem zusätzlich vorhandenen Schadstoff einfach an dem Katalysator umgesetzt und vollständig verbraucht. Dies gilt selbstverständlich nur dann, wenn der Katalysator derart ausgelegt ist, daß bei einer stöchiometrischen Zudosierung des Reaktionsmittels im Bezug zu dem Schadstoff ein im wesentlichen vollständiger Umsatz des Schadstoffes erzielt wird. Überschreitet der aktuelle Wert der Konzentration des Schadstoffs den Mittelwert, so verbleibt die Mehrmenge an Schadstoff als nicht umgesetzter Anteil in dem Abgas, was jedoch den zwar nicht vollständigen jedoch nennenswerten Gesamtumsatz, über die Betriebsdauer der Verbrennungsanlage betrachtet, nicht schmälert.

Das erfindungsgemäße Verfahren bietet den Vorteil, daß keine aufwendigen analytischen Meßgeräte und Sensoren zur Überwachung der aktuellen Abgaszusammensetzung, zur Überwachung der aktuellen Abgastemperatur oder zur Überwachung des aktuellen Betriebszustandes des Katalysators notwendig sind, und dennoch ein Reaktionsmittel-Schlupf sicher vermieden wird. Auch an die Einbringvorrichtung zum Einbringen des Reaktionsmittels in das Abgas brauchen keine hohen Anforderungen hinsichtlich der Dosiergenauigkeit oder hinsichtlich der Dynamik gestellt werden, da Schwankungen in der Eingabemenge des Reaktionsmittels durch die ohnehin unterstöchiometrische Zudosierung abgefangen werden. All dies prädestiniert den Einsatz dieses Verfahrens zur Abgasreinigung an Altanlagen oder an Verbrennungsanlagen, bei denen zum Einhalten gesetzlicher Abgasvorschriften nicht zwangsläufig der gesamte Anteil an Schadstoff im Abgas entfernt werden braucht. Insbesondere trifft dies auf zur Traktion von Fahrzeugen eingesetzten Verbrennungsmotoren, insbesondere Dieselmotoren, zu, für welche die Grenzwerte der erlaubten Emissionen von Schadstoffen erst allmählich abgesenkt werden.

Insbesondere hat es sich gezeigt, daß sich ein Schlupf an Reaktionsmittel oder daraus entstehender Sekundärprodukte sicher vermeiden läßt, wenn das Reaktionsmittel in das Abgas der Verbrennungsanlage gegenüber dem Mittelwert derart unterstöchiometrisch eingebracht wird, daß ein Anteil zwischen 55 und 95 % des Schadstoffes tatsächlich umgesetzt wird. In diesem Fall werden Schwankungen hinsichtlich der Emission an Schadstoff sicher ausgeglichen, ohne daß es zu einer Emission an Reaktionsmittel kommt.

Vorteilhafterweise wird das Reaktionsmittel in Bezug zu dem Mittelwert derart unterstöchiometrisch eingebracht, daß der umgesetzte Anteil des Schadstoffes einen Wert von 75 % aufweist. In diesem Fall wird ein beachtenswerter Abbau des Schadstoffes erzielt, und gleichzeitig sind genügend Sicherheitsreserven vorhanden, um Schwankungen hinsichtlich der Reaktionsmittelmenge oder der Konzentration des Schadstoffes auszugleichen, ohne daß es zu einer Mehremission an Reaktionsmittel hinter dem Katalysator kommt.

Die Zudosierung des Reaktionsmittels läßt sich in einfacher Art und Weise vornehmen, indem während eines Betriebszustandes der Verbrennungsanlage mit einer annähernd zeitlich konstanten Schadstoffemission das Reaktionsmittel auch konstant unterstöchiometrisch eingebracht wird. Wird beispielsweise ein über die Betriebsdauer der Verbrennungsanlage gemittelter Umsatz des Schadstoffes von 80 % gewünscht, so wird während eines derartigen Betriebszustandes entsprechend der im Abgas vorhandenen Konzentration des Schadstoffes einfach eine gegenüber der stöchiometrischen Menge um den entsprechenden Faktor verringerte Menge an Reaktionsmittel in das Abgas eingebracht.

In vorteilhafter Weise kann die Konzentration des Schadstoffes direkt durch einen geeigneten Sensor im Abgas ermittelt werden. Aus den aufgenommenen Meßwerten kann dann ein zeitlicher Mittelwert gebildet werden, zu welchem entsprechend unterstöchiometrisch zudosiert wird. Über welchen Zeitraum gemittelt wird, hängt dabei von der Verbrennungsanlage ab. Auch bei einer Verbrennungsanlage mit häufigen Lastwechseln müssen keine hohen Anforderungen an einen derartigen Sensor hinsichtlich seiner Ansprechgeschwindigkeit gestellt werden.

Vorteilhafterweise wird der von einem verhältnismäßig langsamen Sensor ermittelte Wert der Konzentration des Schadstoffes direkt als ein Mittelwert für die entsprechend unterstöchiometrische Eingabe des Reaktionsmittels berücksichtigt.

Alternativ kann die Konzentration des Schadstoffes im Abgas ausgehend von betriebsrelevanten Parametern der Verbrennungsanlage ermittelt werden. Hierzu wird in einer geeigneten Kontrolleinheit ein entsprechendes Kennfeld hinterlegt, welches einen funktionalen Zusammenhang zwischen einem durch die betriebsrelevanten Parametern definierten Betriebszustand der Verbrennungsanlage und der Konzentration des Schadstoffes im Abgas darstellt. Betriebsrelevante Parameter können z.B. die Verbrennungstemperatur, der Brennstoffumsatz, der Sauerstoffverbrauch oder die Last sein. Bei einem Verbrennungsmotor stehen als derartige betriebsrelevante Parameter auch die Gaspedalstellung, die Drehzahl oder das Drehmoment zur Verfügung.

Das angegebene Verfahren eignet sich insbesondere zur Entfernung von Stickoxiden gemäß dem SCR-Verfahren. Als ein geeignetes Reaktionsmittel ist hierbei Ammoniak oder eine Ammoniak freisetzende Substanz, insbesondere Harnstoff, von Vorteil.

Zur Durchführung des Verfahrens wird eine Vorrichtung zur katalytischen Entfernung eines Schadstoffes in einem Abgas einer Verbrennungsanlage mit einem Abgaskanal, mit einer Einbringvorrichtung zum Einbringen des Reaktionsmittels in das Abgas, mit einem von dem Abgas/Reaktionsmittel-Gemisch durchströmbaren Katalysator zur Umsetzung des Reaktionsmittels mit dem Schadstoff und mit einer Kontrolleinheit zur Steuerung des Reaktionsmittel-Durchsatzes in der Einbringvorrichtung in Abhängigkeit von der Konzentration des Schadstoffes im Abgas angegeben, wobei erfindungsgemäß der Katalysator derart ausgelegt ist, daß bei einer in Bezug zur Konzentration des Schadstoffes stöchiometrischen Zudosierung des Reaktionsmittels ein im wesentlichen vollständiger Umsatz des Schadstoffes erfolgt, und wobei die Kontrolleinheit für die Ermittlung eines über mehrere Betriebszustände mit unterschiedlichen Schadstoffemissionen gebildeten zeitlichen Mittelwerts der Konzentration des Schadstoffes im Abgas und für eine unterstöchiometrische Zudosierung entsprechend dem Mittelwert ausgelegt ist. Vorteilhafterweise ist die Kontrolleinheit für eine derart unterstöchimetrische Zudosierung ausgelegt, daß der am Katalysator umgesetzte Anteil des Schadstoffes zwischen 55 und 95 %, vorzugsweise 75 %, beträgt. Die Kontrolleinheit erfaßt hierzu den aktuellen Wert der Konzentration des Schadstoffes im Abgas und ermittelt daraus einen über einen gewissen Zeitraum gemittelten Mittelwert der Konzentration. Mit einem vorgegebenen Verringerungsfaktor gegenüber der stöchiometrischen Menge wird dann eine entsprechend unterstöchiometrische Menge an Reaktionsmittel über die Einbringvorrichtung in das Abgas eingebracht.

Bei einer mit häufigen Lastwechseln betriebenen Verbrennungsanlage kann es hierzu vorteilhafterweise vorgesehen sein, daß die Kontrolleinheit Betriebszustände mit nahezu konstanter Emission an Schadstoff erkennt und während dieser Zeit in entsprechender Art und Weise unterstöchiometrisch zudosiert. Es braucht lediglich der gewünschte mittlere Umsatz des Schadstoffes zwischen 55 und 95 %, vorzugsweise 75 %, vorgegeben werden.

Die Einbringvorrichtung selbst kann in an sich bekannter Art und Weise in Form eines Einspritzventils, einer Einspritzdüse oder bei großen Anlagen in Form eines über den Querschnitt des Abgaskanals verteilten Eindüsegitters verwirklicht sein. Die Dosierung kann dabei entweder durch direkte Steuerung der Einspritzdüse oder des Einspritzventils oder über ein in der Zuführleitung für das Reaktionsmittel vorgesehenes steuerbares Ventil erfolgen.

Zur Erfassung der Konzentration des Schadstoffes im Abgas ist vorteilhafterweise in der Abgasleitung zwischen der Verbrennungsanlage und dem Katalysator ein geeigneter Sensor angeordnet. Mittelt der Sensor aufgrund einer langen Ansprechzeit über verschiedene Betriebszustände der Verbrennungsanlage hinweg, so erübrigt es sich, daß die Kontrolleinheit selbst Betriebszustände mit annähernd konstanter Emission an Schadstoff erkennt. Es braucht lediglich der mittels des Sensors ermittelte Wert der Konzentration des Schadstoffes für die unterstöchiometrische Zudosierung berücksichtigt werden.

In einer anderen vorteilhaften Ausgestaltung der Erfindung wird die Konzentration des Abgases anhand von betriebsrelevanten Parametern der Verbrennungsanlage ermittelt. Hierzu ist, wie bereits beschrieben, in der Kontrolleinheit ein entsprechendes Kennlinienfeld oder eine Kennlinie hinterlegt. Zur Erfassung der betriebsrelevanten Parameter sind der Kontrolleinheit geeignete Sensorelemente zugeordnet. Eine solche Vorgehensweise bietet sich insbesondere bei einem Verbrennungsmotor an, welcher ein elektronisches Motormanagement und damit über eine geeignete elektronische Schnittstelle verfügt. Über eine solche Schnittstelle können in einfacher Art und Weise Informationen über den Betriebszustand der Verbrennungsanlage, wie beispielsweise Verbrennungstemperatur, Brennstoffverbrauch, Drehmoment, Drehzahl aber auch Einspritzzeitpunkt und dergleichen entnommen werden. Die hierfür vorgesehenen Sensoren sind Stand der Technik.

Insbesondere zur Entfernung von Stickoxiden gemäß dem SCR-Verfahren ist es vorteilhaft, wenn der Katalysator als ein DeNOx-Katalysator in Wabenform ausgebildet ist und die Materialien Titandioxid zu 70 bis 95 Gew.-%, Wolframtrioxid und/oder Molybdäntrioxid zu 5 bis 20 Gew.-% und Vanadiumpentoxid zu weniger als 5 Gew.-% umfaßt. Als Reaktionsmittel kann hierfür Ammoniak oder eine Ammoniak freisetzende Substanz wie Harnstoff verwendet werden.

Im folgenden wird ein Ausführungsbeispiel der Erfindung anhand einer Zeichnung näher erläutert. Dabei zeigt:

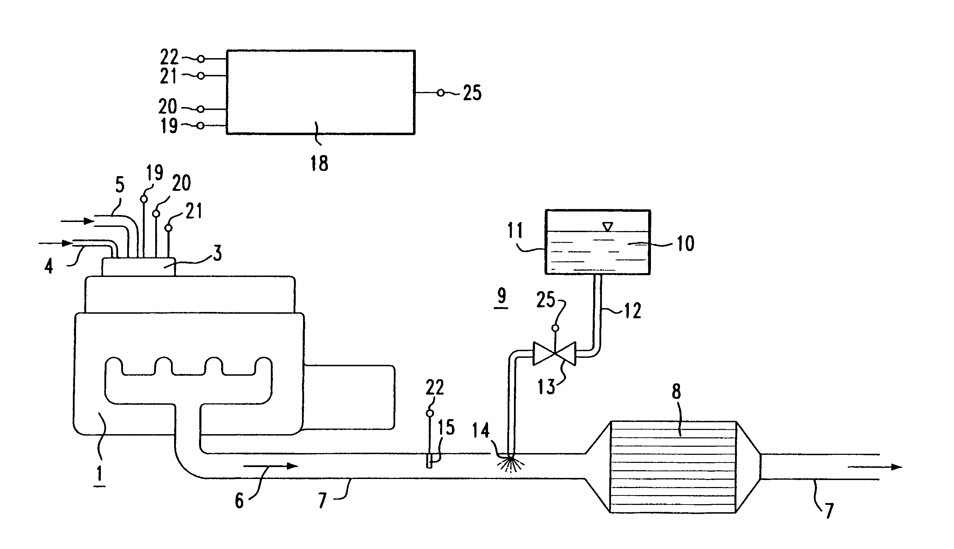

FIG 1 einen Dieselmotor mit einer angeschlossenen Vorrichtung zur katalytischen Entfernung der Stickoxide aus dem Abgas.

In Figur 1 ist als eine Verbrennungsanlage 1 ein Dieselmotor gezeigt, welcher mit einer Abgas-Reinigungsvorrichtung zur Beseitigung von Stickoxiden ausgestattet ist. Der Dieselmotor weist eine Schnittstelle 3 auf, an welcher auf elektronischem Wege die aktuellen Werte betriebsrelevanter Parameter abgegriffen werden können. Über eine Brennstoff-Zuführung 4 und eine Luftansaugung 5 wird dem Dieselmotor ein Brennstoff/ Luft-Gemisch zur Verbrennung zur Verfügung gestellt. Das Abgas 6 des Dieselmotors wird über einen Krümmer in einen Abgaskanal 7 geleitet und über einen Katalysator 8 nach außen geführt. Hierbei ist der Katalysator 8 als ein sogenannter DeNOx-Katalysator ausgebildet, welcher nach dem bekannten SCR-Verfahren Stickoxide mit Hilfe des Reaktionsmittels Ammoniak zu molekularem Stickstoff und Wasser zersetzt. Die benötigte Menge an Ammoniak wird durch Hydrolyse aus zudosiertem Harnstoff gewonnen.

Für die Dosierung des Harnstoffs ist eine Einbringvorrichtung 9 vorgesehen, welche für das Reaktionsmittel 10 (= Harnstoff) einen Vorratsbehälter 11, eine Zuführleitung 12, ein Dosierventil 13 und eine Einspritzdüse 14 umfaßt.

Der Katalysator 8 zum Abbau der Stickoxide ist als ein wabenförmiges Vollextrudat aus einer keramischen Masse aus 90 Gew.-% Titandioxid, 8 Gew.-% Wolframtrioxid und weniger als 2 Gew.-% Vanadiumpentoxid ausgebildet. Die Auslegung des Katalysators 8 ist derart gewählt, daß auch bei maximaler Emission an Stickoxiden bei stöchiometrischer Zudosierung des Reaktionsmittels 10 ein im wesentlichen vollständiger Abbau der Stickoxide erfolgt.

Zusätzlich ist zwischen der Verbrennungsanlage 1 und dem Katalysator 8 in dem Abgaskanal 7 ein handelsüblicher Schadstoffsensor 15 zur Erfassung der Stickoxidkonzentration durch Leitfähigkeitsänderung angeordnet.

Zur Steuerung der Einbringvorrichtung ist eine Kontrolleinheit 18 vorgesehen. Über die Ausgänge 19, 20 und 21 der Schnittstelle 3 des Dieselmotors stehen der Kontrolleinheit die aktuellen Werte für Brennstoffverbrauch, Drehzahl bzw. Drehmoment zur Verfügung. Ferner kann über den Ausgang 22 des Schadstoffsensors 15 auf die gemessene Stickoxidemission des Dieselmotors zurückgegriffen werden.

Wahlweise kann direkt die über den Schadstoffsensor 15 ermittelte oder über eine in die Kontrolleinheit 18 implementierte Kennlinie ausgehend von den betriebsrelevanten Parametern Brennstoffverbrauch, Drehzahl und Drehmoment berechnete Stickoxidkonzentration zur Ermittlung der pro Zeiteinheit einzubringende Menge an Reaktionsmittel 10 herangezogen werden.

In Betriebszuständen der Verbrennungsanlage mit einem annähernd konstanten zeitlichen Verlauf der Konzentration der Stickoxide im Abgas steuert die Kontrolleinheit 18 das Dosierventil 13 der Einbringvorrichtung 9 derart, daß pro Zeiteinheit entsprechend einem vorgebbaren Verringerungsfaktor gegenüber der stöchiometrischen Menge an Reaktionsmittel 10 eine entsprechend verringerte Menge an Reaktionsmittel 10 dem Abgas 6 beigegeben wird. Der eingegebene Harnstoff zerfällt in dem Abgas 6 durch Hydrolyse in Ammoniak und Resten, wobei Ammoniak als ein Reaktionsmittel mit den Stickoxiden an dem Katalysator 8 reagiert. Für die Kontrolleinheit kann ein Umsatzwert für den Schadstoff zwischen 55 und 95 % eingegeben werden.

Im Falle der Berechnung der Konzentration des Schadstoffes aus betriebsrelevanten Parametern mittelt die Kontrolleinheit 18 über einen Zeitraum von Minuten. Im Falle der Ermittlung der Konzentration mittels des Schadstoffsensors 15 wird der direkt gemessene Wert als ein Mittelwert herangezogen.

## Patentansprüche

1. Verfahren zur katalytischen Entfernung eines Schadstoffes in einem Abgas (6) einer Verbrennungsanlage (1) mit Betriebszuständen unterschiedlicher Schadstoffemissionen, wobei in Abhängigkeit von der Konzentration des Schadstoffes pro Zeiteinheit eine vorgegebene Menge eines Reaktionsmittels (10) in das Abgas (6) eingebracht und zusammen mit dem Schadstoff an einem Katalysator (8) umgesetzt wird,
**dadurch gekennzeichnet, daß** für die Konzentration des von der Verbrennungsanlage erzeugten Schadstoffs über mehrere Betriebszustände mit unterschiedlichen Schadstoffemissionen hinweg ein zeitlicher Mittelwert gebildet wird, und daß bei einem bei stöchiometrischer Zudosierung des Reaktionsmittels (10) in Bezug zu dem Schadstoff auf einen im wesentlichen vollständigen Umsatz des Schadstoffes ausgelegten Katalysator (9) das Reaktionsmittel (10) unterstöchiometrisch in Bezug zu dem zeitlichen Mittelwert der Schadstoffkonzentration in das Abgas (6) eingebracht wird.

2. Verfahren nach Anspruch 1,
**dadurch gekennzeichnet, daß** das Reaktionsmittel (10) gegenüber dem Mittelwert derart unterstöchiometrisch in das Abgas (6) eingebracht wird, daß der am Katalysator (8) tatsächlich umgesetzte Anteil des Schadstoffes zwischen 55 und 95 % beträgt.

3. Verfahren nach Anspruch 2,
**dadurch gekennzeichnet, daß** das Reaktionsmittel (10) gegenüber dem Mittelwert derart unterstöchiometrisch eingebracht wird, daß der umgesetzte Anteil des Schadstoffes 75 % beträgt.

4. Verfahren nach einem der Ansprüche 1 bis 3,
**dadurch gekennzeichnet, daß** das Reaktionsmittel (10) während Betriebszustände der Verbrennungsanlage (1) mit einer annähernd zeitlich konstanten Schadstoffemission auch zeitlich konstant unterstöchiometrisch eingebracht wird.

5. Verfahren nach einem der Ansprüche 1 bis 4,
**dadurch gekennzeichnet, daß** der zeitliche Mittelwert über eine Messung der Konzentration des Schadstoffes direkt im Abgas (6) gebildet wird.

6. Verfahren nach Anspruch 5,
**dadurch gekennzeichnet, daß** der zeitliche Mittelwert über einen Schadstoffsensor (15) mit langer Ansprechzeit gebildet wird.

7. Verfahren nach einem der Ansprüche 1 bis 4,
**dadurch gekennzeichnet, daß** der zeitliche Mittelwert ausgehend von betriebsrelevanten Parametern der Verbrennungsanlage (1) ermittelt wird.

8. Verfahren nach einem der Ansprüche 1 bis 5,
**dadurch gekennzeichnet, daß** das Reaktionsmittel (10) Ammoniak oder eine Ammoniak freisetzende Substanz, insbesondere Harnstoff, ist, und als Schadstoff Stickoxide gemäß dem Verfahren der selektiven katalytischen Reduktion an einem DeNOx-Katalysator beseitigt werden.

9. Vorrichtung zur katalytischen Entfernung eines Schadstoffes in einem Abgas (6) einer Verbrennungsanlage (1) mit Betriebszuständen unterschiedlicher Schadstoffemissionen, mit einem Abgaskanal (7), mit einer Einbringvorrichtung (9) zum Einbringen eines Reaktionsmittels (10) in das Abgas (6), mit einem vom Abgas (6) durchströmbaren Katalysator (8) zur Umsetzung des Reaktionsmittels (10) mit dem Schadstoff und mit einer Kontrolleinheit (18) zur Steuerung des Reaktionsmitteldurchsatzes in der Einbringvorrichtung (9) in Abhängigkeit von der Konzentration des Schadstoffes im Abgas (6),
**dadurch gekennzeichnet, daß** der Katalysator (8) derart ausgelegt ist, daß bei einer in Bezug zur Konzentration des Schadstoffes stöchiometrischen Zudosierung des Reaktionsmittels (10) ein im wesentlichen vollständiger Umsatz des Schadstoffes erfolgt, und daß die Kontrolleinheit (18) für die Ermittlung eines über mehrere Betriebszustände mit unterschiedlichen Schadstoffemissionen gebildeten zeitlichen Mittelwerts der Konzentration des von der Verbrennungsanlage erzeugten Schadstoffs im Abgas (6) und für eine unterstöchiometrische Zudosierung des Reaktionsmittels (10) entsprechend diesem Mittelwert ausgelegt ist.

10. Vorrichtung nach Anspruch 9,
**dadurch gekennzeichnet, daß** die Kontrolleinheit (18) für eine derart unterstöchiometrische Zudosierung des Reaktionsmittels (10) ausgelegt ist, daß der am Katalysator (8) umgesetzte Anteil des Schadstoffes zwischen 55 und 95 %, vorzugsweise 75 %, beträgt.

11. Vorrichtung nach Anspruch 9 oder 10,
**dadurch gekennzeichnet, daß** die Kontrolleinheit (18) für eine Bildung des Mittelwerts während Betriebszustände der Verbrennungsanlage (1) mit annähernd konstanter Schadstoffemission ausgelegt ist.

12. Vorrichtung nach einem der Ansprüche 9 bis 11,
**dadurch gekennzeichnet, daß** in dem Abgaskanal (7) zwischen der Verbrennungsanlage (1) und dem Katalysator (8) ein mit der Kontrolleinheit (18) verbundener Schadstoffsensor (15) zur Erfassung der Konzentration des Schadstoffes im Abgas angeordnet ist.

13. Vorrichtung nach einem der Ansprüche 9 bis 11,
**dadurch gekennzeichnet, daß** der Kontrolleinheit (18) mittels Sensorelementen betriebsrelevante Parameter der Verbrennungsanlage (1) verfügbar sind, und daß die Kontrolleinheit (18) zur Ermittlung der Konzentration des Schadstoffes im Abgas ausgehend von den betriebsrelevanten Parametern ausgelegt ist.

14. Vorrichtung nach einem der Ansprüche 9 bis 13,
**dadurch gekennzeichnet, daß** der Katalysator (8) als ein DeNOx-Katalysator in Wabenform zur Entfernung von Stickoxiden mittels eines Reduktionsmittels ausgebildet ist und die Materialien Titandioxid zu 70 bis 95 Gew.-%, Wolframtrioxid und/oder Molybdäntrioxid zu 5 bis 20 Gew.-% und Vanadiumpentoxid zu weniger als 5 Gew.-% umfaßt.

## Claims

1. Method for the catalytic removal of a pollutant contained in an exhaust gas (6) of a combustion system (1) with operating states of different pollutant emissions, a predetermined amount of a reagent (10) being introduced into the exhaust gas (6) as a function of the concentration of the pollutant per unit time and being reacted with the pollutant at a catalytic converter (8), **characterized in that** a temporal mean is formed for the concentration of the pollutant produced by the combustion system over a plurality of operating states with different pollutant emissions, and **in that**, in the case of a catalytic converter (8) which, given stoichiometric metering of the reagent (10) with respect to the pollutant, is designed for substantially complete conversion of the pollutant, the reagent (10) is introduced into the exhaust gas (6) in substoichiometric proportions with respect to the temporal mean of the pollutant concentration.

2. Method according to Claim 1, **characterized in that** the reagent (10) is introduced into the exhaust gas (6) in substoichiometric proportions with respect to the mean, in such a manner that the proportion of the pollutant which is actually converted at the catalytic converter (8) is between 55 and 95%.

3. Method according to Claim 2, **characterized in that** the reagent (10) is introduced in substoichiometric proportions with respect to the mean, in such a manner that the proportion of pollutant converted is 75%.

4. Method according to one of Claims 1 to 3, **characterized in that** the reagent (10), during operating states of the combustion system (1) which involves approximately temporally constant emission of pollutant, is also introduced in temporally constant substoichiometric proportions.

5. Method according to one of Claims 1 to 4, **characterized in that** the temporal mean is formed by measuring the concentration of the pollutant directly in the exhaust gas (6).

6. Method according to Claim 5, **characterized in that** the temporal mean is formed using a pollutant sensor (15) with a long response time.

7. Method according to one of Claims 1 to 4, **characterized in that** the temporal mean is determined on the basis of relevant operating parameters of the combustion system (1).

8. Method according to one of Claims 1 to 5, **characterized in that** the reagent (10) is ammonia or a substance which releases ammonia, in particular urea, and the pollutants eliminated are nitrogen oxides, using the selective catalytic reduction process on a DeNOx catalytic converter.

9. Device for the catalytic removal of a pollutant contained in an exhaust gas (6) of a combustion system (1) with operating states of different pollutant emissions, having an exhaust pipe (7), having an introduction device (9) for introducing a reagent (10) into the exhaust gas (6), having a catalytic converter (8) through which the exhaust gas (6) can flow, for reacting the reagent (10) with the pollutant, and having a control unit (18) for controlling the reagent throughput in the introduction device (9) as a function of the concentration of the pollutant in the exhaust gas (6), **characterized in that** the catalytic converter (8) is designed in such a manner that, if the reagent (10) is metered in in stoichiometric proportions with respect to the concentration of the pollutant, the pollutant is substantially completely converted, and **in that** the control unit (18) is designed to determine a temporal mean, formed over a plurality of operating states with different pollutant emissions, of the concentration of the pollutant produced by the combustion system in the exhaust gas (6) and for substoichiometric metering of the reagent (10) according to this mean.

10. Device according to Claim 9, **characterized in that** the control unit (18) is designed for substoichiometric metering of the reagent (10), in such a manner that the proportion of the pollutant which is converted at the catalytic converter (8) is between 55 and 95%, preferably 75%.

11. Device according to Claim 9 or 10, **characterized in that** the control unit (18) is designed to form the mean during operating states of the combustion system (1) in which the pollutant emission is approximately constant.

12. Device according to one of Claims 9 to 11, **characterized in that** a pollutant sensor (15), which is connected to the control unit (18), is arranged in the exhaust pipe (7) between the combustion system (1) and the catalytic converter (8), in order to detect the concentration of the pollutant in the exhaust gas.

13. Device according to one of Claims 9 to 11, **characterized in that** relevant operating parameters of the combustion system (1) are available to the control unit (18) by means of sensor elements, and **in that** the control unit (18) is designed to determine the concentration of the pollutant in the exhaust gas on the basis of the relevant operating parameters.

14. Device according to one of Claims 9 to 13, **characterized in that** the catalytic converter (8) is designed as a DeNOx catalytic converter in honeycomb form for removing nitrogen oxides by means of a reducing agent and comprises the materials titanium dioxide in a proportion of from 70 to 95% by weight, tungsten trioxide and/or molybdenum trioxide in a proportion of from 5 to 20% by weight, and vanadium pentoxide in a proportion of less than 5% by weight.

## Revendications

1. Procédé d'élimination catalytique d'un polluant dans un gaz d'échappement (6) d'une installation à combustion interne (1) avec des émissions de polluant différentes selon les états de fonctionnement, dans lequel on introduit en fonction de la concentration du polluant par unité de temps une quantité prédéfinie d'un agent réactionnel (10) dans le gaz d'échappement et on le fait réagir avec le polluant sur un catalyseur (8), **caractérisé en ce que**, pour la concentration du polluant émis par l'installation à combustion interne sur plusieurs états de fonctionnement avec des émissions de polluant différentes on forme une valeur moyenne en fonction du temps, et que pour un catalyseur (8) étudié pour un dosage stoechiométrique de l'agent réactionnel (10) en fonction du polluant sur une conversion sensiblement totale du polluant on introduit l'agent réactionnel (10) en quantité stoechiométrique inférieure par rapport à la valeur moyenne en fonction du temps de la concentration du polluant dans le gaz d'échappement (6).

2. Procédé selon la revendication 1, **caractérisé en ce qu'**on introduit l'agent réactionnel (10) dans le gaz d'échappement (6) en une quantité stoechiométrique inférieure par rapport à la valeur moyenne de manière que la quantité de polluant ayant réagi effectivement sur le catalyseur (8) soit entre 55 et 95 %.

3. Procédé selon la revendication 2, **caractérisé en ce que** l'agent réactionnel (10) est introduit en une quantité stoechiométrique inférieure par rapport à la valeur moyenne, de manière que la quantité de polluant ayant réagi soit de 75 %.

4. Procédé selon l'une des revendications 1 à 3, **caractérisé en ce qu'**on introduit l'agent réactionnel (10) pendant les états de fonctionnement de l'installation à combustion interne (1) avec une émission de polluant sensiblement constante dans le temps également en une quantité constante dans le temps inférieure à la quantité stoechiométrique.

5. Procédé selon l'une des revendications 1 à 4, **caractérisé en ce qu'**on obtient la valeur moyenne dans le temps par une mesure de la concentration du polluant directement dans le gaz d'échappement (6).

6. Procédé selon la revendication 5, **caractérisé en ce qu'**on obtient la valeur moyenne dans le temps par un détecteur de polluant (15) avec un temps correspondant long.

7. Procédé selon l'une des revendications 1 à 4, **caractérisé en ce qu'**on détermine la valeur moyenne dans le temps à partir de paramètres appropriés de fonctionnement de l'installation à combustion interne (1).

8. Procédé selon l'une des revendications 1 à 5, **caractérisé en ce que** l'agent réactionnel (10) est de l'ammoniac ou une substance libérant de l'ammoniac, en particulier de l'urée, et qu'on élimine comme polluant l'oxyde d'azote selon le procédé de réduction catalytique sélective sur un catalyseur DeNoX.

9. Dispositif pour éliminer catalytiquement un polluant dans un gaz d'échappement (6) d'une installation à combustion interne (1) avec des émissions de polluant différentes selon les états de fonctionnement, avec une canal de gaz d'échappement (7), avec une installation d'amenée (9) pour l'amenée d'un agent réactionnel (10) dans le gaz d'échappement (6), avec un catalyseur (8) traversé par le courant de gaz d'échappement (6) pour la réaction de l'agent réactionnel (10) avec le polluant et avec une unité de contrôle (18) pour le réglage du débit de l'agent réactionnel dans l'installation d'amenée (9) en fonction de la concentration du polluant dans le gaz d'échappement (6), **caractérisé en ce que** le catalyseur (8) est placé de manière que par un dosage stoechiométrique de l'agent réactionnel (10) en fonction de la concentration du polluant ait lieu une réaction sensiblement complète du polluant, et que l'unité de contrôle (18) pour la détermination d'une valeur moyenne de la concentration du polluant dans le gaz d'échappement (6) produit par l'installation à combustion interne, en fonction du temps sur plusieurs états de fonctionnement avec des émissions de polluant différentes et pour un dosage inférieur à la quantité stoechiométrique de l'agent réactionnel (10) soit étudiée de manière correspondante à cette valeur moyenne.

10. Dispositif selon la revendication 9, **caractérisé en ce que** l'unité de contrôle (18) est étudiée pour un dosage de l'agent réactionnel (10) inférieur à la quantité stoechiométrique de manière que la quantité de polluant ayant réagi sur le catalyseur (8) soit entre 55 et 95 %, de préférence 75 %.

11. Dispositif selon la revendication 9 ou 10, **caractérisé en ce que** l'unité de contrôle (18) est étudiée pour la formation de la valeur moyenne pendant des états de fonctionnement de l'installation de combustion interne (1) avec une émission de polluant sensiblement constante.

12. Dispositif selon l'une des revendications 9 à 11, **caractérisé en ce que** dans le canal de gaz d'échappement (7) entre l'installation à combustion interne (1) et le catalyseur (8) est placé un détecteur de polluant (15) lié avec l'unité de contrôle (18) pour la perception de la concentration du polluant dans le gaz d'échappement.

13. Dispositif selon l'une des revendications 9 à 11, **caractérisé en ce que** l'unité de contrôle (18) est disponible au moyen d'éléments détecteurs de paramètres appropriés de fonctionnement de l'unité à combustion interne (1), et que l'unité de contrôle (18) est étudiée en fonction des paramètres appropriés de fonctionnement pour la définition de la concentration du polluant dans le gaz d'échappement.

14. Dispositif selon l'une des revendications 9 à 13, **caractérisé en ce que** le catalyseur (8) est conçu comme un catalyseur DeNOx sous forme de nid d'abeilles pour l'élimination des oxydes d'azote au moyen d'un agent de réduction et que le matériau comprend 70 à 95 % en poids de dioxyde de titane, 5 à 20 % en poids de trioxyde de tungstène et/ou de trioxyde de molybdène et moins de 5 % en poids de pentoxyde de vanadium.
